# EUROPEAN PATENT APPLICATION

(11) **EP 1 207 312 A2**
(43) Date of publication of application: **22.05.2002**
(21) Application number: 01500167.0
(22) Date of filing: 02.07.2001
(51) Int. Cl.: F16B 25/10

(54) **Screw for wood and similar materials**

(30) Priority: 20.11.2000 ES 200002816
(71) Applicant: Celo Distribucion, S.A., 08211 Castellar del Valles (ES)
(72) Inventor: Ceravalls Pujol, Ramon, 08017 Barcelona (ES)
(74) Representative: Ponti Sales, Adelaida

(57) **Abstract**

It comprises a shank (2), provided with a thread (4) and ending in a point (3), and a head (1), with the thread formed of a double spiral (41,42) inclined at an angle (α) of at least 10° with respect to a plane (π) perpendicular to the axis of the screw, and is characterised in that the shank (2) of the screw has a straight section of trilobular shape.

Preferably, the shank (2) is such that k/D is greater than 4%, where D is the maximum transverse dimension of the shank (2) and k the trilobularity ratio, defined as the difference between the circumscribed diameter of the shank (2) and the maximum transverse dimension of the shank (2).

The shape of the shank (2) reduces the effort to drive the screw in.

## Description

This invention relates to a screw for wood and similar materials, of the type which comprises a shank, provided with a thread and ending in a point, and a head, with the thread formed of a spiral inclined at an angle of at least 10° with respect to a plane perpendicular to the axis of the screw.

### BACKGROUND OF THE INVENTION

Some existing screws for wood present in general a single helicoidal thread, with a relatively small inclination of around 8° with respect to the plane perpendicular to the axis of the screw.

This inclination provides good properties of securing into the wood; it nevertheless has the disadvantage that inserting the screw requires a relatively large number of turns and encounters considerable resistance due to friction with the wood, thus making it slow.

If the inclination of the thread is increased, the speed of insertion of the screw is increased, but the threading torque required to insert the screw into the wood also increases; as a result, this characteristic does not of itself satisfactorily resolve the problem.

There also exist double-threaded screws, that is, screws whose thread is made up of a double spiral, and with angles of inclination of more than 10°.

This greater inclination of the thread permits a good speed of insertion of the screw, while the double spiral improves securing of the screw and increases thread passage torque; however, due to the high friction forces of the double spiral, such screws have a very high threading torque and are laborious to insert.

### DESCRIPTION OF THE INVENTION

The objective of this invention is to resolve the aforesaid disadvantages, by providing a screw, which can be driven rapidly into wood, plastic or other similar materials, within thereby compromising the firmness of anchorage.

In accordance with this objective, the screw of the invention is characterised in that the shank of the screw has a straight section of trilobular shape.

The trilobularity of the shank compensates the increased threading torque due to the characteristics of the thread, and avoids the need to make a considerable effort to drive the screw in.

Preferably, the thread is inclined at an angle of between 10° and 30° with respect to the perpendicular plane of the axis of the screw, an angle of approximately 16° being particularly advantageous.

In one embodiment, the shank of the screw is such that k/D is greater than 4%, where D is the maximum transverse dimension of the shank and k the trilobularity ratio, defined as the difference between the circumscribed diameter of the shank and the maximum transverse diameter of the shank.

The trilobularity means that that the threading torque reduces because the friction of the wood on the shank is reduced, thereby facilitating driving of the screw; this does not prejudice the securing force, however, because once the screw has been inserted the wood that surrounds the shank expands slightly again and fits tightly around the trilobular shape.

In accordance with another advantageous aspect of the screw of the invention, the angle of the turns of the thread is between 25° and 50°.

This particularly acute angle of the turns leads to improved geometry of the hole that the screw cuts into the wood, that is, it leaves a hole that fits more closely against the shape of the screw itself, thereby improving the grip of the screw.

### BRIEF DESCRIPTION OF THE DRAWINGS

For a better understanding of all that has been set out, some drawings are attached which show, schematically and solely by way of non-restrictive example, a practical case of embodiment.

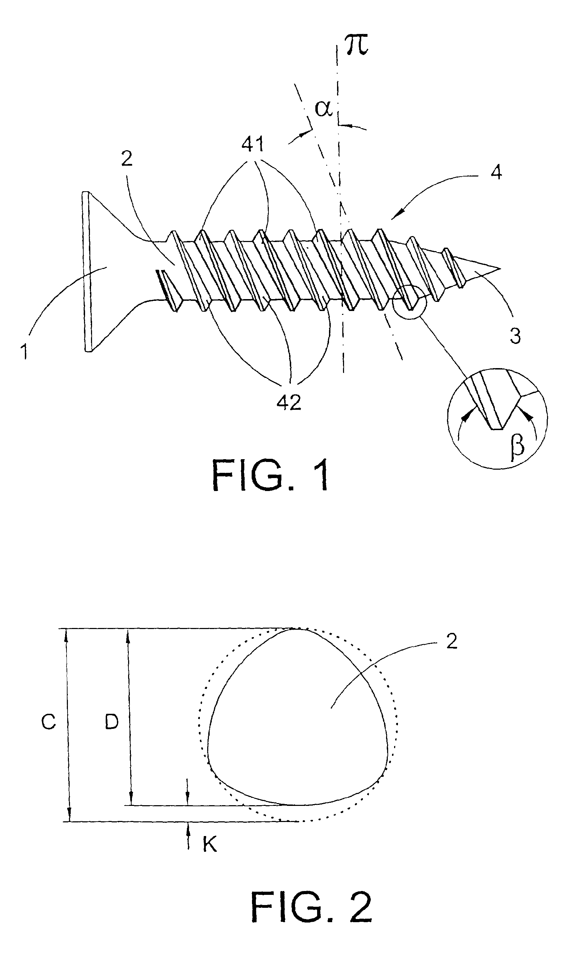

In said figures, Figure 1 shows an elevation view of a screw in accordance with the invention, and figure 2 shows a cross-section at enlarged scale of the screw shank, without any thread.

### DESCRIPTION OF A PREFERRED EMBODIMENT

As Figure 1 shows, the screw of the invention has a head 1 and a shank 2 finishing in a point. The shank 2 has a double-pitch thread 4, that is, a thread made up of two parallel spirals 41 and 42 that alternate with each other.

The spirals 41 and 42 have an inclination ∝ of between 10° and 30° with respect to the plane π perpendicular to the axis of the screw; for greater clarity in the drawing, in the figure an angle of approximately 22° has been shown, although the most effective value is one of approximately 16°.

The turns 41,42 of the thread have a quite acute vertex, with an angle ß of between 25° and 50°, as can be appreciated in the enlarged detail of Figure 1, so that the helicoidal hole that the screw cuts into the wood fits precisely around the thread itself.

Figure 2 shows at enlarged scale the section of the shank 2 of the screw. As can be appreciated, the shank 2 is not round but trilobular in section.

The function fulfilled by this trilobular shape is that of permitting insertion of the screw without effort, as will be explained below.

The inclination and the double pitch of the thread described induces high friction between the screw and the wood during insertion, and therefore a considerable threading torque: the trilobular design of the shank permits this disadvantage to be compensated, since it largely prevents friction of the shank against the wood.

Once the screw has been inserted into the wood, the wood expands slightly and finally takes up the slight play between the shank and the hole in the wood, so that the grip of the screw is not reduced.

The degree of trilobularity of the screw shank can be defined in function of its maximum transverse dimension, indicated as D in the figure, and of its circumscribed diameter, indicated as C in Figure 2: the ratio of trilobularity k is the difference C-D, and in accordance with the invention fulfils the condition k/D ≥ 4%.

Other types of trilobular screw usually have a less marked trilobularity ratio, for example with k/D values between 2% and 3%.

In spite of the fact that one specific embodiment of this invention has been described and shown, it is obvious that an expert on the subject would be able to introduce variants and modifications, or replace the details by others that are technically equivalent, without departing from the sphere of protection defined by the attached claims.

For example, the shape of the head of the screw and the slot it has for fitting a driving tool can be any shape.

Likewise, the specific geometry of the two turns of thread is not limited to that shown in the figures.

The screws in accordance with the invention can be applied to all types of woods (natural wood, chipboard, plywood, etc.) and also to other materials, for example plastics, of similar characteristics.

## Claims

1. Screw for wood, comprising a shank (2), provided with a thread (4) and ending in a point (3), and a head (1), with the thread formed of a double spiral (41,42) inclined at an angle (α) of at least 10° with respect to a plane (π) perpendicular to the axis of the screw, **characterised in that** the shank (2) of the screw has a straight section of trilobular shape.

2. Screw as claimed in Claim 1, **characterised in that** the thread (4) is inclined at an angle (α) of between 10° and 30° with respect to the plane (π) perpendicular to the axis of the screw.

3. Screw as claimed in Claim 2, **characterised in that** the thread (4) is inclined at an angle (α) of approximately 16° with respect to the plane (π) perpendicular to the axis of the screw.

4. Screw as claimed in any of claims 1 to 3, **characterised in that** the shank (2) is such that k/D is greater than 4%, where D is the maximum transverse dimension of the shank (2) and k the trilobularity ratio, defined as the difference between the circumscribed diameter of the shank (2) and the maximum transverse dimension of the shank (2).

5. Screw as claimed in any of claims 1 to 4, **characterised in that** the angle (ß) of the turns of the thread (4) is between 25° and 50°.
